# EUROPEAN PATENT SPECIFICATION

(11) **EP 3 800 366 B1**
(45) Date of publication and mention of the grant of the patent: **09.03.2022**
(21) Application number: 20194602.7
(22) Date of filing: 04.09.2020
(51) Int. Cl.: F16C 35/077, F16C 27/04, F16C 27/06

(54) **BEARING SPRING FOR EPICYCLICAL GEAR SYSTEM HOUSING ASSEMBLY**
LAGERFEDER FÜR DIE GEHÄUSEANORDNUNG EINES PLANETENGETRIEBESYSTEMS
RESSORT PORTEUR POUR ENSEMBLE BOÎTIER DE SYSTÈME D'ENGRENAGE ÉPICYCLOÏDAL

(30) Priority: 03.10.2019 US 201916592494
(43) Date of publication of application: 07.04.2021
(73) Proprietor: Rolls-Royce Corporation, Indianapolis, IN 46225 (US)
(72) Inventor: Winely, Mark, Avon, IN 46123 (US)
(74) Representative: Rolls-Royce plc

(56) References cited:
- EP-A1- 2 588 770
- EP-A1- 3 690 267
- EP-A1- 3 719 266
- EP-A2- 2 538 036
- US-A1- 2006 083 448
- US-A1- 2006 204 153
- US-A1- 2015 233 293

## Description

### FIELD OF THE DISCLOSURE

The present disclosure relates to epicyclic gear systems for gas turbine engines, more particularly a housing assembly for an epicyclical gear system.

### BACKGROUND

Epicyclical gear systems may be used in rotating machinery to transfer energy from one component, such as a rotatable shaft, to another. By altering certain variables such as the number, size, and teeth of the gears, an epicyclical gear system may be designed to transfer energy between components at a desired ratio and often convert a high-speed, low-torque input to a lower-speed, higher-torque output.

Epicyclical gear systems may be suitable for a wide range of applications, including the transfer of energy from a turbine shaft to a fan rotor in a geared turbofan engine. However, in such dynamic applications the epicyclical gear system must be designed to allow some degree of relative movement between parts of the system to avoid excessive wear and, in extreme conditions, system failure.

European patent application no. EP 3719266 A1 describes an assembly for use in a bearing compartment including a pedestal and a damper. The assembly further includes an anti-rotation feature configured to resist rotation of a first annular spring relative to at least one of the pedestal or the damper.

European patent application no. EP 3690267 A1 describes a damping member for a bearing comprising first and second damper rings with first and second damping chambers between the damping member and the bearing support.

United States patent application no. US 2015 233293 A1 describes an annular spring and oil film damper for a bearing assembly. The annular spring comprises inner and outer supports with a series of ligaments in between which function to provide a similar stiffness in both the radial and circumferential direction.

United States patent application no. US 2006 204153 A1 describes a support for a bearing comprising a resilient ring having unevenly spaced inner and outer bumpers. The unevenly spaced bumpers provide anisotropy to the rotor to preclude non-synchronous vibration.

United States patent application no. US 2006 083448 A1 describes a compact compliant centering support for a squeeze damper for the bearing assembly of a turbomachine. The support interfaces between a bearing outer race, and an outer support structure.

European patent application no. EP 2538036 A2 describes a bearing support assembly comprising a centering spring and a bearing support member integrally joined together to form a onepiece structure. The bearing support member extends from the centering spring to connect to an engine case of the gas turbine engine.

European patent application no. EP 2588770 A1 describes a method for dynamically absorbing shocks in a power shaft whilst maintaining the rigidity at a front bearing so as to not compromise the meshing of power teeth of a drive pinion. The method includes providing an additional shock absorber linked by a flexible frame mounted on a common casing downstream of a bearing assembly.

### SUMMARY

The present invention provides a housing assembly for an epicyclical gear system of a gas turbine engine, and a method of accommodating relative movement between components of an epicyclic gear system, as set out in the appended claims.

According to a first aspect the present invention provides a housing assembly for an epicyclical gear system of a gas turbine engine, the housing assembly comprises a housing, a planet gear, a sun gear, a ring gear, and a bearing assembly. The housing defines a gear shaft pocket having a cylindrical wall. The planet gear includes a cylindrical gear shaft having one end portion disposed within the gear shaft pocket coaxially with the cylindrical wall, a sun gear engaging gear carried by the cylindrical gear shaft, and a ring gear engaging gear carried by the cylindrical gear shaft. The sun gear is engaged with the planet gear. The ring gear is engaged with the planet gear. The bearing assembly comprises a bearing disposed over at least a portion of the end portion of the gear shaft, and an annular spring disposed over at least a portion of the bearing. The cylindrical gear shaft, the sun gear, the planet gear, and the ring gear form a compound star gear in an epicyclical gear system.

In some embodiments the bearing is a roller bearing.

In some embodiments the annular spring comprises an annular body and a plurality of mutes spaced about a circumference of the body. In some embodiments each of the plurality of mutes has the same radial dimension. In some embodiments each of the plurality of mutes has a radial dimension between 0.8 and 1.0 of a radial dimension of the body. In some embodiments each of the plurality of mutes has a radial dimension that is half of a radial dimension of the body. In some embodiments each of the plurality of mutes has a circumferential length equal to the circumferential length between adjacent mutes. In some embodiments each of the plurality of mutes has a circumferential length between 0.8 and 1.0 of the circumferential length between adjacent mutes. In some embodiments the circumference is an inner circumference. In some embodiments the circumference is an outer circumference.

According to a second aspect the present invention provides a method for accommodating relative movement between components of an epicyclic gear system of a gas turbine engine. The method comprises positioning a bearing at least partly in a pocket defined by a gear housing member of a housing assembly of the first aspect; carrying a portion of the cylindrical shaft of the planet gear of the housing assembly with the bearing; positioning an annular spring between the bearing and gear housing member; and effecting flexion of the annular spring responsive to relative movement between the bearing and gear housing member. In some embodiments the method further comprises rotating the cylindrical shaft.

According to further aspects of the present disclosure, a gear housing assembly in an epicyclical gear system comprises a forward housing member, an aft housing member, a planet gear, a forward bearing assembly, an aft bearing assembly, and an annular spring. The forward housing member defines a plurality of gear shaft pockets having a cylindrical wall. The aft housing member defines a plurality of gear shaft pockets having a cylindrical wall. The planet gear comprises a cylindrical shaft having a forward end portion disposed in a gear shaft pocket of the forward housing member coaxially with the cylindrical wall of the pocket, an aft end portion disposed within a gear shaft pocket of the aft housing member coaxially with the cylindrical wall of the pocket, and a pair of gears carried by the shaft between the forward and aft end portions. The forward bearing assembly comprises a bearing disposed over at least a portion of the forward end portion. The aft bearing assembly comprises a bearing disposed over at least a portion of the aft end portion. The first annular spring is disposed over at least a portion of one of the bearing disposed over at least a portion of the forward end portion and the bearing disposed over at least a portion of the aft end portion.

In some embodiments a first gear of the pair of gears engages a sun gear, and a second gear of the pair of gears engages a ring gear. In some embodiments the bearing assembly further comprises a second annular spring disposed over at least a portion of the other of the bearing disposed over at least a portion of the forward end portion and the bearing disposed over at least a portion of the aft end portion. In some embodiments the first annular spring and the second annular spring have the same shape and dimensions. In some embodiments the first annular spring and the second annular spring have a different shape or dimensions. In some embodiments the bearing assembly further comprises an intermediate housing member defining an intermediate bore, and wherein a portion of the cylindrical shaft extends through the intermediate bore.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

The following will be apparent from elements of the figures, which are provided for illustrative purposes.
**Fig. 1** is a sectional side view of a gas turbine engine.
**Fig. 2** is a close up sectional side view of an upstream portion of a gas turbine engine.
**Fig. 3** is a partially cut-away view of a gearbox for a gas turbine engine.
**Fig. 4** is a schematic and cross sectional view of an epicyclical gear system in accordance with some embodiments of the present invention.
**Fig. 5** is a detailed schematic and cross sectional view of a planet gear disposed in an epicyclical gear system in accordance with some embodiments of the present invention.
**Fig. 6** is a schematic and cross sectional view of a portion of an epicyclical gear system in accordance with some embodiments of the present invention.
**Fig. 7** is a partial cross sectional view of a spring in accordance with some embodiments of the present invention.
**Fig. 8** is a flow diagram of a method in accordance with some embodiments of the present invention.

The present application discloses illustrative (i.e., example) embodiments. The claimed inventions are not limited to the illustrative embodiments.

### DETAILED DESCRIPTION

For the purposes of promoting an understanding of the principles of the disclosure, reference will now be made to a number of illustrative embodiments in the drawings and specific language will be used to describe the same.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg-1K-1/(ms-1)2). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds), for example in the range of from 80 Nkg-1s to 100 Nkg-1s, or 85 Nkg-1s to 95 Nkg-1s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

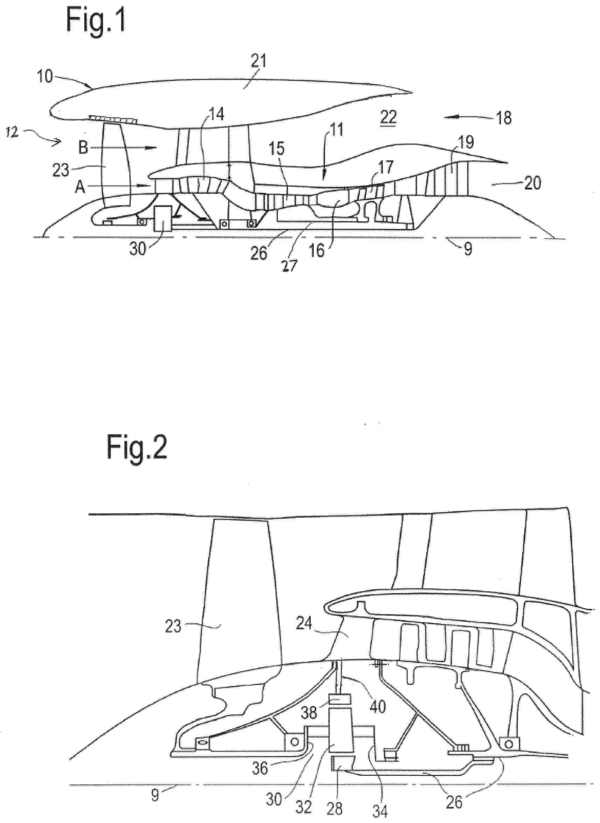

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

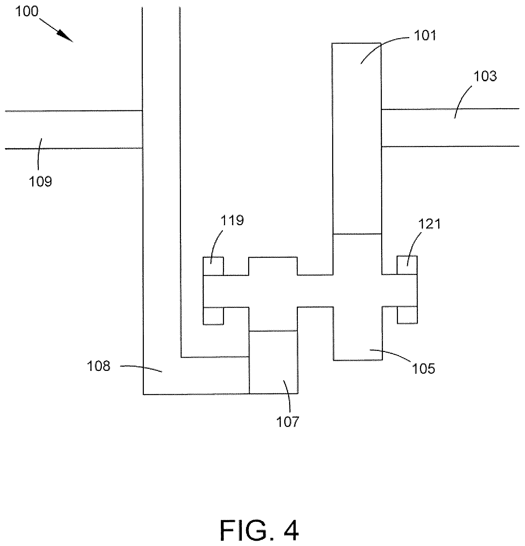

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 105 (see Figure 4) to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

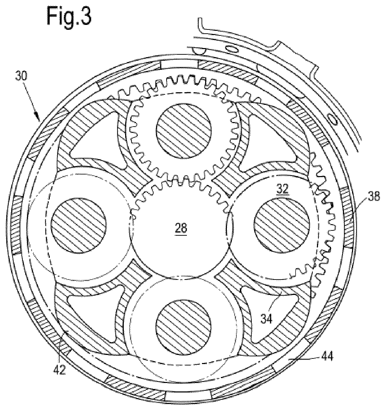

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

**Figure 4** provides a schematic view of an epicyclical gear system 100 in accordance with some embodiments of the present disclosure. The epicyclical gear system 100 is a compound star gear system. A sun gear 101 is coupled to and driven by a first rotatable shaft 103. The sun gear 101 is engaged with one or more planet gears 105, 32, such that rotation of the sun gear 101 causes rotation of the one or more planet gears 105, 32. The planet gears 32 are star gears, such that the planet gears 32 rotate about an axis that is fixed relative to the axis of rotation of the sun gear 101.

Each of the one or more planet gears 105, 32 are engaged with a ring gear 107. The ring gear 107 is coupled via a ring gear hub 108 to a second rotatable shaft 109. Rotation of the first rotatable shaft 103 thus drives rotation of the second rotatable shaft 109 via rotation of the sun gear 101, one or more planet gears 105, 32, and ring gear 107. In some embodiments, the first rotatable shaft 103 may be a turbine shaft (i.e. high or low speed spool) of a turbine engine, and the second rotatable shaft 109 may be a fan shaft or fan rotor.

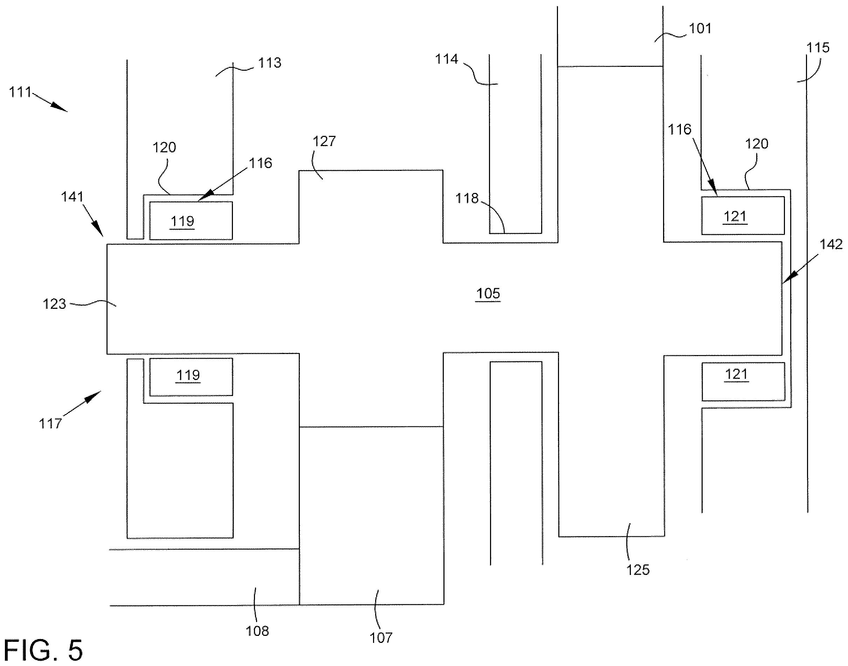

**Figure 5** provides a detailed and schematic view of a housing assembly 111 of a epicyclical gear system 100 in accordance with with the invention. Each of the one or more planet gears 105, 32 comprises a cylindrical gear shaft 123, a sun gear engaging gear 125, and a ring gear engaging gear 127. The sun gear engaging gear 125 and ring gear engaging gear 127 are carried by the cylindrical gear shaft 123. Each of the one or more planet gears 105, 32 is carried by the housing assembly 111. The planet gears 32 may be a compound star gear of the epicyclical gear system 100.

The housing assembly 111 may comprise a forward housing member 113 and an aft housing member 115. In some embodiments, the housing assembly 111 further comprises an intermediate housing member 114. One or more of the housing members 113, 114, 115 may be joined together. The forward housing member 113 and aft housing member 115 each define a plurality of gear shaft pockets 116 having a cylindrical wall 120. The intermediate housing member 114 may define a plurality of bores 118.

A cylindrical gear shaft 123 of a planet gear 105 may have a forward end portion 141 disposed within one of the plurality of gear shaft pockets 116 formed by the forward housing member 113. The cylindrical gear shaft 123 of the same planet gear 105 may have an aft end portion 142 disposed within one of the plurality of gear shaft pockets 116 formed by the aft housing member 115. The cylindrical gear shaft 123 may be disposed within each gear shaft pocket 116 coaxially with the cylindrical wall 120 of the gear shaft pocket 116. The cylindrical gear shaft 123 may extend through the bore 118 defined by the intermediate housing member 114. The sun gear engaging gear 125 and ring gear engaging gear 127 of planet gear 105 may be carried by the gear shaft 123 between the forward end portion 141 and the aft end portion 142.

The housing assembly 111 may further comprise a bearing assembly 117. The housing assembly 111 may comprise a forward bearing assembly and an aft bearing assembly. The bearing assembly 117 may comprise a bearing. For example, a forward bearing 119 may be disposed over at least a portion of the forward end portion 141 of the gear shaft 123 and an aft bearing 121 may be disposed over at least a portion of the aft end portion 142 of the gear shaft 123. Each of the bearings 119, 121 may rotatably carry the planet gear 105. Each of the bearings 119, 121 may be a roller element bearing.

During operation of the epicyclical gear system 100 the constituent pieces of the system 100 as described above and including additional carrier assemblies, housings, and bearings, may move relative to one another. Even small changes in the relative positioning of one component to another can have significant impacts on performance of the system 100. For example, misalignment of enmeshed gear teeth and/or bearings can cause uneven gear and/or bearing loading, and degradation or damage to gear teeth.

Of particular concern is the fore-to-aft alignment of the gear shaft 123 of each planet gear 105. Since each planet gear 105 is carried by the gear shaft 123 partly disposed within gear shaft pockets 116 of a forward housing member 113 and an aft housing member 115, relative movement or changes in relative positioning between the forward housing member 113 and aft housing member 115 can cause misalignment of the planet gear 105. Similarly, relative movement or changes in relative positioning between the intermediate housing member 114 and either or both of the forward housing member 113 and aft housing member 115 can cause misalignment of the planet gear 105.

This misalignment may in turn lead to uneven load sharing among the planet gears 32, gear degradation, and shortened useful life of the planet gears 32 and/or the planet bearings. Factors that may contribute to planet gear misalignment include unaligned forces between the forward bearing 119 and aft bearing 121, manufacturing inaccuracies for the positions of the gear shaft pockets 116 and bore 118, gear tolerance, and inflexibility and/or relative stiffness between each of the housing members 113, 114, 115.

The present disclosure is therefore directed to systems and methods for improving and maintaining planet gear alignment in a epicyclical gear system. More specifically, the present disclosure is directed to a housing assembly for an epicyclical gear system having a housing, a gear carried by a gear shaft, a bearing carrying a portion of the gear shaft, and an annular spring. The annular spring is disposed between the bearing and the housing (i.e. one of the forward or aft housing members) to accommodate relative movement between the two.

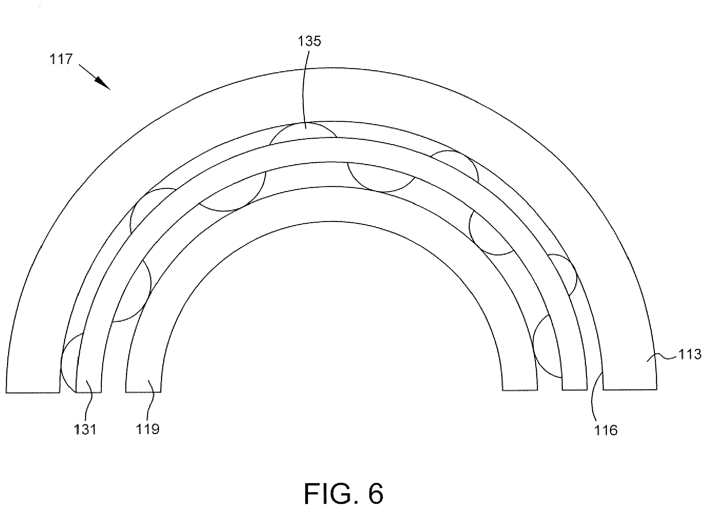

**Figure 6** provides a schematic and cross sectional view of a portion of a epicyclical gear system 100 in accordance with some embodiments of the present disclosure. The cross section shown in Figure 6 is taken normal to the axis of rotation of first shaft 103 and/or second shaft 109, while the cross sections shown in Figures 4 and 5 are taken along the axis of rotation. While Figure 6 is labeled to illustrate the forward housing member 113, it is equally effective to illustrate the aft housing member 115 and/or the intermediate housing member 114.

As shown in Figure 6, a bearing assembly 117 may include an annular spring 131 disposed over at least a portion of bearing 119. The spring 131 may be positioned between the bearing 119 and the forward housing member 113. The spring 131 may be positioned at least partially within the gear shaft pocket 116, between the forward housing member 113 and the bearing 119. The spring 131 may be coaxial with one or both of the cylindrical wall 120 of the gear shaft pocket 116 and/or the bearing 119. The spring 131 may accommodate relative movement between the forward housing member 113 and the bearing 119. The spring 131 may be effective to prevent, reduce, or minimize fore-to-aft misalignment of the gear shaft 123.

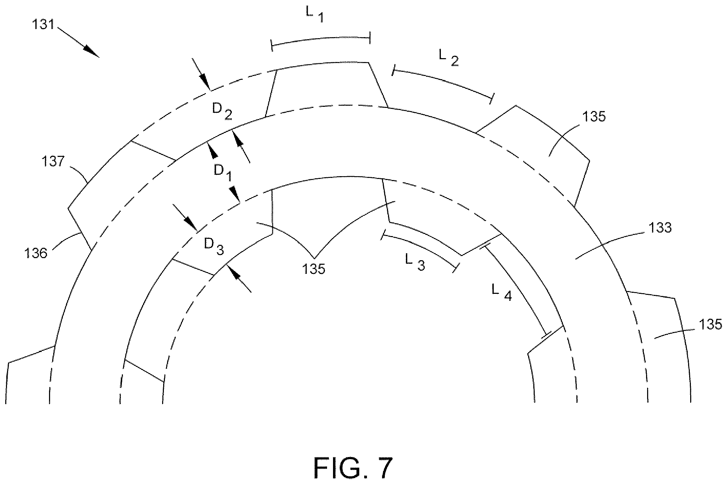

The spring 131 may be tailored to achieve a desired deflection and/or stiffness. Figure 7 provides a partial cross sectional view of a spring in accordance with some embodiments. The spring 131 may comprise an annular body 133 and a plurality of mutes 135 spaced about one or both of the inner circumference and outer circumference of the annular body 133. The shape, dimensions (e.g. radial depth, circumferential length, etc.), and spacing of the mutes 135 may be altered to achieve the desired deflection and/or stiffness of the spring 131, and thus to achieve the desired or possible reduction in fore-to-aft misalignment of the gear shaft 123.

In the embodiment of Figure 7, the spring 131 comprises a plurality of mutes 135 spaced about both the inner and outer circumferences of the annular body 133. The mutes 135 are shaped with linear side edge surfaces 136 and arcuate radially outer surfaces 137. In other embodiments the mutes 135 may be shaped to be arcuate, parabolic, curved, or linear.

In Figure 7, the mutes 135 along the outer circumference have a radial dimension D2 that is approximately half of the radial dimension D1 of the body 133. In other embodiments, the mutes 135 along the outer circumference may have a radial dimension D2 between 0.25 and 1.25 the radial dimension D1 of the body 133. The mutes 135 along the inner circumference have a radial dimension D3 that is approximately half of the radial dimension D1 of the body 133. In other embodiments, the mutes 135 along the inner circumference may have a radial dimension D3 between 0.25 and 1.25 the radial dimension D1 of the body 133. All mutes 135 along the outer or inner circumference may have the same radial dimension D2, D3 as other mutes 135 along the same circumference. However, in some embodiments mutes 135 may have varying radial dimensions D2, D3 when compared to other mutes 135 along the same circumference of the body 133. In some embodiments the mutes 135 along the inner and/or outer circumference may have a radial dimension D2, D3 between 0.8 and 1.0 of the radial dimension D1 of the body 133.

In Figure 7, the mutes 135 along the outer circumference have a circumferential length L1 that is approximately equal to the circumferential length L2 between mutes 135. In other words, the mutes 135 are spaced from each other by a distance L2 equal to the length L1 of the mutes 135. In other embodiments, the mutes 135 along the outer circumference may have a circumferential length L1 between 0.25 and 1.25 of the circumferential length L2 separating adjacent mutes 135. The mutes 135 along the inner circumference likewise have a circumferential length L3 that is approximately equal to the circumferential length L4 between mutes 135. In other embodiments, the mutes 135 along the inner circumference may have a circumferential length L3 between 0.25 and 1.25 of the circumferential length L4 separating adjacent mutes 135. In some embodiments the mutes 135 along the inner and/or outer circumference may have a circumferential length L1, L3 between 0.8 and 1.0 of the circumferential length L2, L4 between mutes 135.

The radial dimension D1 of the spring 131 may be sized to achieve a desired stiffness of the spring 131 and/or deflection. The radial dimension D1 of a spring 131 may be uniform or nonuniform about the circumference of the spring 131. The radial dimension D1 of a first, e.g. forward, spring 131 may be different than or the same as the radial dimension D1 of a second, e.g. aft, spring 131.

The number of mutes 135 spaced about the inner and/or outer circumference of the spring 131 may also be varied to achieve a desired stiffness of the spring 131 and/or deflection. The mutes 135 may be uniformly or non-uniformly spaced about the circumference. The number of mutes 135 of a first, e.g. forward, spring 131 may be different than or the same as the number of mutes 135 of a second, e.g. aft, spring 131.

In some embodiments, one or more housing liners (not shown) may be positioned in a gear shaft pocket 116. The housing liner may be positioned between spring 131 and forward housing member 113, and/or may be positioned between spring 131 and the bearing 119.

In some embodiments, a spring 131 may be disposed over at least a portion of one of the bearing 119 or bearing 121. In other words, the spring 131 may be positioned between only one of the forward bearing 119 and the forward housing member 113 or aft roller element bearing 121 and aft housing member 115. For example, to achieve a desired deflection of the gear shaft 123, an embodiment may include a spring 131 positioned between the aft roller element bearing 121 and aft housing member 115 while having no spring 131 positioned between forward bearing 119 and the forward housing member 113.

In some embodiments a spring 131 positioned between the forward bearing 119 and the forward housing member 113 may be different in shape, dimensions, and mutes than a spring 131 positioned between the aft roller element bearing 121 and the aft housing member 115. In some embodiments a spring 131 positioned between the forward bearing 119 and the forward housing member 113 may have a first stiffness and a spring 131 positioned between the aft roller element bearing 121 and the aft housing member 115 may have a second stiffness. The first stiffness may be greater than, equal to, or less than the second stiffness.

During operation of the epicyclical gear system 100, force from the bearing 119 is applied to the spring 131, causing the spring 131 to deflect locally unless and until it contacts the housing member 113. The spring 131 allows the portion of the gear shaft 123 that is loaded more than other portions to deflect incrementally more than the other portions, thus evening load share across the plurality of gear shafts 123 of the epicyclical gear system 100 within the constraints of the spring stiffness.

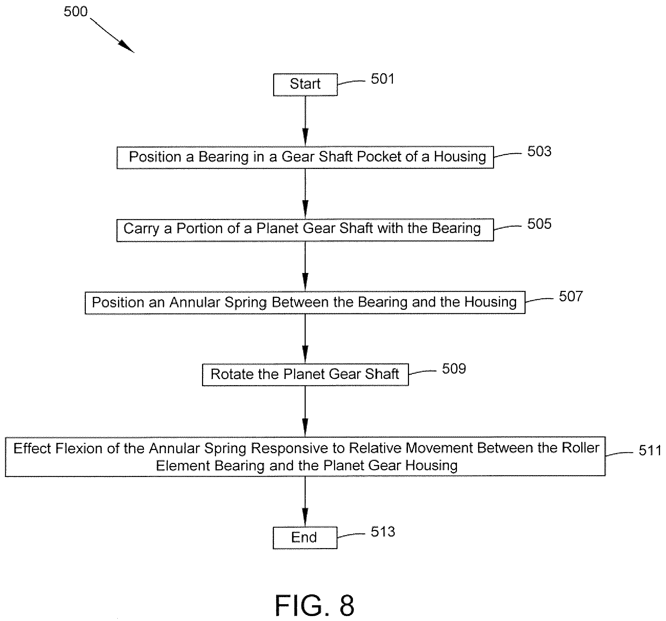

**Figure 8** is a flow diagram of a method 500 of accommodating relative movement between components of an epicyclical gear system 100 in accordance with some embodiments of the present disclosure. Method 500 starts at Block 501. The steps of method 500, presented at Blocks 501 through 513, may be performed in the order presented in Figure 8 or in another order. One or more steps of the method 500 may not be performed.

At Block 503 a bearing 119 may be at least partly positioned in a gear shaft pocket 116 defined by a housing member 113 of the epicyclical gear system 100. At Block 505 the bearing 119 may carry at least a portion of a gear shaft 123 of a planet gear 105 of the epicyclical gear system 100. The bearing 119 may be disposed over at least a portion of an end portion 141 of the gear shaft 123.

At Block 507 an annular spring 131 may be positioned at least partly in the gear shaft pocket 116. The annular spring 131 may be positioned between the bearing 119 and the planet gear housing member 113. The annular spring 131 may be disposed over a portion of the bearing 119. The annular spring 131 may be substantially as described above with reference to Figures 6 and 7.

At Block 509 the gear shaft 123 may be rotated, for example through rotating of a sun gear 101 or ring gear 107 engaged with the planet gear 105. Rotation of the gear shaft 123 and/or operation of the epicyclical gear system 100 may cause deflection of the gear shaft 123 and/or fore-to-aft misalignment of the gear shaft 123.

At Block 511 the annular spring 131 may flex or deflect responsive to relative movement between the bearing 119 and the planet gear housing member 113. Flexing or deflecting of the annular spring 131 may accommodate all or some of the relative movement between the bearing 119 and the planet gear housing member 113.

Method 500 ends at Block 513.

The presently disclosed epicyclical gear system 100, housing assembly 111, and bearing assembly 117 have numerous advantages over prior art systems. Since the life of a bearing is proportional to the cube of the bearing load, by ensuring a more even load distribution the disclosed bearing assembly having a spring is able to greatly improve the life of the associated bearings. The disclosed spring may accommodate deflections of the planet gear shaft to improve load distribution, and springs may be tailored to achieve a desired impact to the fore-to-aft alignment of the planet gear shaft.

Although examples are illustrated and described herein, embodiments are nevertheless not limited to the details shown, since various modifications and structural changes may be made therein by those of ordinary skill within the scope of the following claims.

## Claims

1. A housing assembly (111) for an epicyclical gear system (100) of a gas turbine engine (10), the housing assembly comprising:
a housing (113, 114, 115) defining a gear shaft pocket (116) having a cylindrical wall (120);
a planet gear (105), the planet gear including:
a cylindrical gear shaft (123) having one end portion disposed within said gear shaft pocket coaxially with said cylindrical wall;
a sun gear engaging gear (125) carried by the cylindrical gear shaft (123); and
a ring gear engaging gear (127) carried by the cylindrical gear shaft (123);
a sun gear (101) engaged with the planet gear (105);
a ring gear (107) engaged with said planet gear (105); and
a bearing assembly (117) comprising:
a bearing (119) disposed over at least a portion of the end portion of said gear shaft; and
an annular spring (131) disposed over at least a portion of said bearing,
wherein the cylindrical gear shaft (123), the sun gear (101), the planet gear (105) and the ring gear (107) form a compound star gear in an epicyclical gear system (100).

2. The housing assembly of Claim 1 wherein said bearing (119) is a roller bearing.

3. The housing assembly of Claim 1 or 2 wherein said annular spring (131) comprises an annular body (133) and a plurality of mutes (135) spaced about a circumference of said annular body.

4. The housing assembly of Claim 3 wherein each of said plurality of mutes (135) has the same radial dimension (R₁, R₂, R₃).

5. The housing assembly of Claim 3 or 4 wherein each of said plurality of mutes (135) has a radial dimension between 0.8 and 1.0 of a radial dimension of said annular body (133).

6. The housing assembly of Claim 3 or 4 wherein each of said plurality of mutes (135) has a radial dimension that is half of a radial dimension of said annular body (133).

7. The housing assembly of Claim 3 wherein each of said plurality of mutes (135) has a circumferential length (L₁, L₂, L₃, L₄) equal to the circumferential length between adjacent mutes.

8. The housing assembly of Claim 3 wherein each of said plurality of mutes (135) has a circumferential length (L₁, L₂, L₃, L₄) between 0.8 and 1.0 of the circumferential length between adjacent mutes.

9. The housing assembly of any one of Claims 3 to 8 wherein said circumference is an inner circumference.

10. The housing assembly of any one of Claims 3 to 8 wherein said circumference is an outer circumference.

11. A method of accommodating relative movement between components of an epicyclic gear system (100) of a gas turbine engine (10), the method comprising the steps of:
positioning a bearing (119) at least partly in a pocket defined by a gear housing member (113, 114, 115) of a housing assembly (111) of any one of Claims 1 to 10;
carrying a portion of the cylindrical shaft (123) of the planet gear (105) of the housing assembly with said bearing;
positioning an annular spring (131) between said bearing (119) and gear housing member; and
effecting flexion of said annular spring responsive to relative movement between said bearing and said gear housing member.

12. The method of Claim 11 further comprising rotating said cylindrical shaft (123).

## Patentansprüche

1. Gehäuseanordnung (111) für ein epizyklisches Getriebesystem (100) eines Gasturbinentriebwerks (10), wobei die Gehäuseanordnung umfasst:
ein Gehäuse (113, 114, 115), das eine Getriebewellentasche (116) definiert, die eine zylindrische Wand (120) aufweist;
ein Planetenrad (105), wobei das Planetenrad enthält:
eine zylindrische Getriebewelle (123), die einen Endabschnitt aufweist, der innerhalb der Getriebewellentasche koaxial mit der zylindrischen Wand angeordnet ist;
ein Sonnenradeingriffszahnrad (125), das von der zylindrischen Getriebewelle (123) getragen wird; und
ein Hohlradeingriffszahnrad (127), das von der zylindrischen Getriebewelle (123) getragen wird;
ein Sonnenrad (101), das mit dem Planetenrad (105) in Eingriff steht;
ein Hohlrad (107), das mit dem Planetenrad (105) in Eingriff steht; und
eine Lageranordnung (117), die umfasst:
ein Lager (119), das über mindestens einem Abschnitt des Endabschnitts der Getriebewelle angeordnet ist; und
eine ringförmige Feder (131), die über mindestens einem Abschnitt des Lagers angeordnet ist,
wobei die zylindrische Getriebewelle (123), das Sonnenrad (101), das Planetenrad (105) und das Hohlrad (107) ein zusammengesetztes Sterngetriebe in einem epizyklischen Getriebesystem (100) bilden.

2. Gehäuseanordnung nach Anspruch 1, wobei das Lager (119) ein Rollenlager ist.

3. Gehäuseanordnung nach Anspruch 1 oder 2, wobei die ringförmige Feder (131) einen ringförmigen Körper (133) und eine Vielzahl von Dämpfern (135) umfasst, die um einen Umfang des ringförmigen Körpers beabstandet sind.

4. Gehäuseanordnung nach Anspruch 3, wobei jeder der Vielzahl von Dämpfern (135) die gleiche radiale Abmessung (R₁, R₂, R₃) aufweist.

5. Gehäuseanordnung nach Anspruch 3 oder 4, wobei jeder der Vielzahl von Dämpfern (135) eine radiale Abmessung zwischen 0,8 und 1,0 einer radialen Abmessung des ringförmigen Körpers (133) aufweist.

6. Gehäuseanordnung nach Anspruch 3 oder 4, wobei jeder der Vielzahl von Dämpfern (135) eine radiale Abmessung aufweist, die die Hälfte einer radialen Abmessung des ringförmigen Körpers (133) beträgt.

7. Gehäuseanordnung nach Anspruch 3, wobei jeder der Vielzahl von Dämpfern (135) eine Umfangslänge (L₁, L₂, L₃, L₄) aufweist, die gleich der Umfangslänge zwischen benachbarten Dämpfern ist.

8. Gehäuseanordnung nach Anspruch 3, wobei jeder der Vielzahl von Dämpfern (135) eine Umfangslänge (L₁, L₂, L₃, L₄) zwischen 0,8 und 1,0 der Umfangslänge zwischen benachbarten Dämpfern aufweist.

9. Gehäuseanordnung nach einem der Ansprüche 3 bis 8, wobei der Umfang ein Innenumfang ist.

10. Gehäuseanordnung nach einem der Ansprüche 3 bis 8, wobei der Umfang ein Außenumfang ist.

11. Verfahren zum Aufnehmen einer relativen Bewegung zwischen Komponenten eines epizyklischen Getriebesystems (100) eines Gasturbinentriebwerks (10), wobei das Verfahren die Schritte umfasst:
Positionieren eines Lagers (119) zumindest teilweise in einer Tasche, die durch ein Getriebegehäuseelement (113, 114, 115) einer Gehäuseanordnung (111) nach einem der Ansprüche 1 bis 10 definiert ist;
Tragen eines Abschnitts der zylindrischen Welle (123) des Planetenrads (105) der Gehäuseanordnung mit dem Lager;
Positionieren einer ringförmigen Feder (131) zwischen dem Lager (119) und dem Getriebegehäuseelement; und
Bewirken einer Biegung der ringförmigen Feder als Reaktion auf eine relative Bewegung zwischen dem Lager und dem Getriebegehäuseelement.

12. Verfahren nach Anspruch 11, ferner umfassend das Drehen der zylindrischen Welle (123).

## Revendications

1. Ensemble boîtier (111) pour un système d'engrenage épicycloïdal (100) d'un moteur à turbine à gaz (10), l'ensemble boîtier comprenant :
un boîtier (113, 114, 115) définissant une poche d'arbre d'engrenage (116) possédant une paroi cylindrique (120) ;
un satellite (105), le satellite comprenant :
un arbre d'engrenage cylindrique (123) possédant une partie extrémité disposée à l'intérieur de ladite poche d'arbre d'engrenage coaxialement à ladite paroi cylindrique ;
un engrenage de mise en prise de planétaire (125) porté par l'arbre d'engrenage cylindrique (123) ; et
un engrenage de mise en prise de couronne (127) porté par l'arbre d'engrenage cylindrique (123) ;
un planétaire (101) en prise avec le satellite (105) ;
une couronne (107) en prise avec ledit satellite (105) ; et
un ensemble palier (117) comprenant :
un palier (119) disposé sur au moins une partie de la partie extrémité dudit arbre d'engrenage ; et
un ressort annulaire (131) disposé sur au moins une partie dudit palier,
ledit arbre d'engrenage cylindrique (123), le planétaire (101), le satellite (105) et la couronne (107) formant un engrenage étoile composé dans un système d'engrenage épicycloïdal (100).

2. Ensemble boîtier selon la revendication 1, ledit palier (119) étant un palier à rouleaux.

3. Ensemble boîtier selon la revendication 1 ou 2, ledit ressort annulaire (131) comprenant un corps annulaire (133) et une pluralité de silencieux (135) espacés autour d'une circonférence dudit corps annulaire.

4. Ensemble boîtier selon la revendication 3, chacun de ladite pluralité de silencieux (135) possédant la même dimension radiale (R₁, R₂, R₃).

5. Ensemble boîtier selon la revendication 3 ou 4, chacun de ladite pluralité de silencieux (135) possédant une dimension radiale comprise entre 0,8 et 1,0 d'une dimension radiale dudit corps annulaire (133).

6. Ensemble boîtier selon la revendication 3 ou 4, chacun de ladite pluralité de silencieux (135) possédant une dimension radiale qui est la moitié d'une dimension radiale dudit corps annulaire (133).

7. Ensemble boîtier selon la revendication 3, chacun de ladite pluralité de silencieux (135) possédant une longueur circonférentielle (L₁, L₂, L₃, L₄) égale à la longueur circonférentielle entre des silencieux adjacents.

8. Ensemble boîtier selon la revendication 3, chacun de ladite pluralité de silencieux (135) possédant une longueur circonférentielle (L₁, L₂, L₃, L₄) comprise entre 0,8 et 1,0 de la longueur circonférentielle entre des silencieux adjacents.

9. Ensemble boîtier selon l'une quelconque des revendications 3 à 8, ladite circonférence étant une circonférence interne.

10. Ensemble boîtier selon l'une quelconque des revendications 3 à 8, ladite circonférence étant une circonférence externe.

11. Procédé d'adaptation d'un mouvement relatif entre des composants d'un système d'engrenage épicycloïdal (100) d'un moteur à turbine à gaz (10), le procédé comprenant les étapes de :
positionnement d'un palier (119) au moins partiellement dans une poche définie par un élément de boîtier d'engrenage (113, 114, 115) d'un ensemble boîtier (111) selon l'une quelconque des revendications 1 à 10 ;
support d'une partie de l'arbre cylindrique (123) du satellite (105) de l'ensemble de carter avec ledit palier ;
positionnement d'un ressort annulaire (131) entre ledit palier (119) et l'élément de boîtier d'engrenage ; et
réalisation d'une flexion dudit ressort annulaire en réponse à un mouvement relatif entre ledit palier et ledit élément de boîtier d'engrenage.

12. Procédé selon la revendication 11, comprenant en outre la rotation dudit arbre cylindrique (123).
